# EUROPÄISCHE PATENTSCHRIFT

(11) **EP 2 223 589 B1**
(45) Veröffentlichungstag und Bekanntmachung des Hinweises auf die Patenterteilung: **30.10.2013**
(21) Anmeldenummer: 10001413.3
(22) Anmeldetag: 11.02.2010
(51) Int. Cl.: A01G 1/08

(54) **Beeteinfassung mit einem verriegelbaren Blechstreifen**
Beet enclosure with a lockable sheet metal strip
Bordure dotée d'un ruban de tôle verrouillable

(30) Priorität: 25.02.2009 DE 102009010505
(43) Veröffentlichungstag der Anmeldung: 01.09.2010
(73) Patentinhaber: Haas, Michael, 88214 Ravensburg (DE); Haas, Daniel, 88214 Ravensburg (DE)
(72) Erfinder: Haas, Michael, 88214 Ravensburg (DE); Haas, Daniel, 88214 Ravensburg (DE)
(74) Vertreter: Riebling, Peter

(56) Entgegenhaltungen:
- DE-C- 523 477
- GB-A- 399 250
- US-A- 1 591 509
- US-A1- 2003 024 157
- US-A1- 2006 150 480

## Beschreibung

Die Erfindung betrifft eine Beeteinfassung mit einem verriegelbaren Blechstreifen nach dem Oberbegriff des Patentanspruches 1.

Es ist bekannt, Beeteinfassungen aus Blechstreifen herzustellen, wobei mehrere längliche Blechstreifen aneinander gefügt werden. Hierbei ist es bekannt, die Längsseiten der Blechstreifen mindestens an einer Seite mit Umbördelungen zu versehen, um den Blechstreifen gegen Einreißen zu schützen und um eine scharfe Kante zu vermeiden.

Solche Beeteinfassungen, die aus einander angestückelten Blechstreifen bestehen, sind jedoch in der Regel nicht biegbar und können deshalb nicht zu runden Beeteinfassungen umgebogen werden.

Bei längs verbindbaren Blechstreifen, die jedoch nur gerade verbindbar sind, ist es bekannt, die Verbindung so zu gestalten, dass die jeweilige Stirnseite des Blechstreifens als Zunge ausgebildet ist, die in eine zugeordnete taschenförmige Aufnahme an der Stirnseite des gegenüberliegenden Blechstreifens hineingeschoben wird.

Dies setzt voraus, dass die Blechstreifen genau in Richtung ihrer Längserstreckung gegeneinander gesteckt und miteinander verbunden werden. Eine derartige Montageart hat jedoch den Dachteil, dass die Blechstreifen alle nur fertig ineinander gesteckt montiert werden können, was bedeutet, dass bei relativ großen Beeteinfassungen mit einem Radius von z. B. 2 m drei oder vier Blechstreifen fertig ineinander gesteckt werden müssen und dann erst als Beeteinfassung in den Erdboden eingebaut werden müssen.

Dies ist eine schwierige Handhabung einer solchen Beeteinfassung und eine unzuträgliche Montage.

Mit der Druckschrift US 2006/0150480 A1 wird ein Einfassungssystem für z.B. Rasenkanten im Gartenbaubereich gezeigt. Das System ist steckbar ausgebildet und weist hierfür männliche und weibliche Steckverbindungsenden auf. Die dort beschriebenen Ausführungsformen haben jedoch den Nachteil, dass sie nur im zusammengesteckten Zustand ins Erdreich eingesetzt werden können. Durch die Ausbildung der Steckverbindungen ist keine Montage der einzelnen Paneelen im Erdreich ermöglichen.

Der Erfindung liegt deshalb die Aufgabe zugrunde, eine Beeteinfassung aus einem verriegelbaren Blechstreifen der eingangs genannten Art so weiterzubilden, dass die................ Blechstreifen nacheinander folgend im Erdboden fixiert oder verankert werden können und so nacheinander folgend die Blechstreifen montiert werden können, ohne dass es der Notwendigkeit bedarf, alle Blechstreifen zusammen erst zu montieren und dann in den Erdboden einzubauen.

Zur Lösung der gestellten Aufgabe ist die Erfindung durch die technische Lehre des Anspruches 1 gekennzeichnet.

Wesentliches Merkmal der Erfindung ist, dass an jedem Ende des jeweiligen Blechstreifens ein Verbindungsende angeordnet ist, wobei das eine Verbindungsende als Zunge ausgebildet ist, während das gegenüberliegende Verbindungsende eine Einschuböffnung für die Aufnahme der Zunge aufweist und dass an dem einen Verbindungsende eine aus der Ebene der Wandung des Blechstreifens herausdrückbare Verriegelungszunge angeordnet ist, die in ein an dem gegenüberliegenden Verbindungsende des Blechstreifens angeordnete Öffnung einschwenkbar und dort verriegelbar ist.

Mit der gegebenen technischen Lehre ergibt sich der wesentliche Vorteil, dass es nun nicht mehr notwendig ist, die Blechstreifen in axialer Richtung miteinander zu verbinden, sondern erfindungsgemäß ist vorgesehen, dass, wenn der eine Blechstreifen montiert ist, der andere Blechstreifen, der mit dem erst genannten verriegelt werden soll, erhöht oberhalb des anderen Blechstreifens angesetzt wird und in senkrechte Richtung zur Längserstreckung nach unten gedrückt wird, so dass die beiden Blechstreifen durch ineinander eingreifende taschenförmige Aufnahmen miteinander verbunden werden.

Damit entfällt die Notwendigkeit, einen kompletten Graben für den Bau einer Beeteinfassung herzustellen, weil der erste Blechstreifen, der für die Beeteinfassung gedacht ist, lediglich in eine mit dem Spaten vorgestochene Vertiefung oder Rinne in den Boden eingesetzt wird, wobei die Rinne beispielsweise eine Tiefe von 10 cm aufweisen muss, wenn man von einem Blechstreifen mit einer Höhe von 13 cm ausgeht.

Dies ist eine sehr einfache Montage, denn es kann nämlich nun zunächst einmal die geplante Beeteinfassung komplett mit dem Spaten abgestochen werden, d. h. es wird lediglich mit dem Spatenblatt eine Rinne in den Boden gestochen und es kann dann zum Beginn der Montage der erste Blechstreifen in diese vorgestochene Rinne eingesetzt werden.

Der nächste Blechstreifen wird dann wiederum an die sich daran anschließende Rinne im Erdboden eingesetzt, jedoch etwas erhöht als der vorherige Blechstreifen, und er wird so stirnseitig an den anderen Blechstreifen herangeführt, dass er in Richtung der Längserstreckung des Blechstreifens von oben nach unten (in vertikale Richtung) auf den anderen Blechstreifen aufgesetzt und in vertikaler Richtung nach unten geschoben wird. Dadurch kommen die einander zugeordneten Teile der beiden Verbindungsstellen der Blechstreifen miteinander in formschlüssigen Kontakt, wobei die Zunge an dem einen Blechstreifen mit einem Aufnahmeschlitz am Bördelrand des anderen Blechstreifens in Eingriff kommt.

Um nun die beiden Blechstreifen gegen erneutes Verschieben in vertikale Richtung zu sichern, ist eine Verriegelungseinrichtung vorgesehen, die aus einer aus der Ebene des Blechstreifens herausbiegbaren Zunge besteht, die in eine gegenüberliegend angeordnete Verriegelungsöffnung zum Eingriff bringbar ist.

Mit der Verwendung einer solchen Verriegelungseinrichtung sind die Blechstreifen sowohl gegen Verschiebung in vertikale Richtung als auch gegen Auseinanderziehen in horizontale Richtung (in Richtung ihrer Längserstreckung) geschützt.

Damit ergibt sich der wesentliche Vorteil, dass mit einer solchen Beeteinfassung es sehr einfach ist, sehr große und raumgreifende Beeteinfassungen zu bauen, denn sie werden Stück für Stück aneinandergereiht, ohne dass die Notwendigkeit besteht, eine komplette Beeteinfassung erst vorzumontieren und dann im Erdboden in einen raumgreifenden Graben zu versenken.

Als Blechstreifen für eine solche Beeteinfassung wird vor allem ein verzinktes Metallblech mit einer Dicke von z. B. 0,65 mm verwendet, welches eine Höhe von z. B. 130 mm aufweist und der Blechstreifen z. B. eine Länge von 1,20 m aufweist.

In einer ersten Ausgestaltung ist es vorgesehen, dass der Blechstreifen vollkommen eben und gerade ausgebildet ist und mindestens einen oberen in Längsrichtung durchgehenden Bördelrand aufweist. Die Dicke des Materials ist so gesehen, dass trotz des Bördelrandes eine gute Biegung eines solchen Blechstreifens möglich ist, so dass es erstmals möglich ist, mit der Aneinanderreihung von derartigen Blechstreifen auch runde Beeteinfassungen formschön und mit gleichmäßigem Radius zu biegen und im Erdboden zu verankern.

In einer zweiten Ausgestaltung der Erfindung kann es vorgesehen sein, dass auch gerade Beeteinfassungen vorgesehen sind, die vor allem zur Begrenzung von Rasenflächen in Richtung auf Blumenbeete geeignet sind. Diese geraden Beeteinfassungen bestehen dann aus Blechstreifen, die eine Abkantung aufweisen, die sich über die gesamte Längsachse erstreckt. Hierdurch ergibt sich eine Paarfläche für das Schneidwerk des Rasenmähers, so dass das Gras bis an die Kante hin sauber geschnitten werden kann.

Es bedarf deshalb keiner Nachbearbeitung.

Die Erfindung ist nicht auf die dargestellte Form der Verriegelungseinrichtung beschränkt. Es können noch andere lösbare Verriegelungseinrichtungen verwendet werden und insbesondere kann die Verriegelungseinrichtung nicht nur einfach vorhanden sein, sondern es können auch mehrere Verriegelungseinrichtungen vorgesehen werden.

Ferner wird in einem ersten Ausführungsbeispiel als erfindungswesentlich beansprucht, dass die an dem einen Verbindungsende angeordnete Zunge des Blechstreifens biegbar ausgebildet ist. Diese Biegbarkeit wird in einer bevorzugten Ausführungsform dadurch erreicht, dass in der vertikalen Achse zur Erreichung der Biegbarkeit der Zunge in der Biegekante eine Anzahl von übereinander liegenden Perforierungen angeordnet sind, um so die Zunge in einen bestimmten Winkel abzubiegen. Auf diese Weise ist es nicht nur möglich, Blechstreifen rund zu einer Beeteinfassung zu biegen, sondern es kann z. B. die Zunge im Winkel von 30, 60 oder 90 Grad abgebogen werden, um so geometrisch abgebogene Verbindungsbereiche zu schaffen, zwischen denen die Blechstreifen entweder wahlweise rund oder gerade verlaufen.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: perspektivische Ansicht eines Blechstreifens nach der Erfindung
- Figur 2:: die vergrößerte Darstellung des linken Verbindungsendes des Blechstreifens
- Figur 3:: die vergrößerte Darstellung des rechten Verbindungsendes des Blechstreifens nach Figur 1
- Figur 4:: eine vergrößerte Schnittansicht gemäß des Schnittes BB in Figur 3
- Figur 5:: Schnitt gemäß der Linie BB in Figur 3
- Figur 6:: eine vergrößerte Schnittansicht des Schnittes AA in Figur 8
- Figur 7:: eine Schnittansicht der Darstellung in Figur 4
- Figur 8:: Schnitt gemäß der Linie A-A in Figur 2
- Figur 9:: eine gegenüber Figur 1 abgewandelte Ausführungsform eines Blechstreifens
- Figur 10:: eine Darstellung eines Blechstreifens mit dem linken Verbindungsende, wobei die Zunge abgebogen ist
- Figur 11:: die Verbindung von zwei Blechstreifen im Bereich der Verbindungsstellen 2, 3
- Figur 12:: die Lage der beiden Blechstreifen nach der Verbindung gemäß dem Arbeitsschritt nach Figur 11
- Figur 13:: die Betätigung der Verriegelungseinrichtung mit einem Werkzeug zum Verriegeln der beiden Verbindungsenden gegeneinander
- Figur 14:: die Darstellung einer abgewinkelten Verbindung zwischen zwei Blechstreifen
- Figur 15:: die Darstellung einer fertig montierten und im Erdboden angeordneten Beeteinfassung

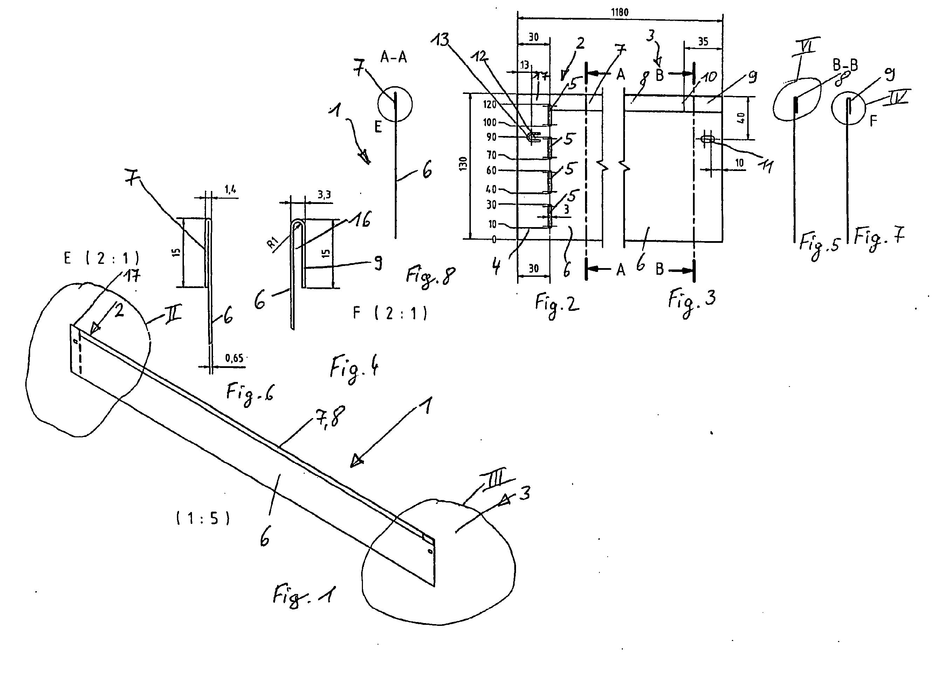

In Figur 1 ist ein Blechstreifen 1 dargestellt, der aus einem dünnen ungebogenen und gerade verlaufenden verzinkten Metallblech besteht. Der Blechstreifen 1 weist zwei einander gegenüberliegende Verbindungsenden 2,3 auf, wobei das Verbindungsende 2 näher in der Zeichnung Figur 2 dargestellt ist, deren Verbindungsende 3 in der Zeichnung nach Figur 3 dargestellt ist.

Das Verbindungsende 2 nach Figur 2 besteht im Wesentlichen aus einer Zunge 4, die aus der Wand 6 des Blechstreifens besteht. Die Zunge 4 ist also unmittelbar auf dem Material der Wand 6 des Blechstreifens 1 gebildet und weist nur am oberen Ende eine Freistellung 17 auf. Dies bedeutet, dass der umgebördelte obere stirnseitige und sich über die gesamte Länge erstreckende Bördelrand 7 sich nur bis kurz vor die Freistellung 17 erstreckt.

Damit die Zunge in einer bevorzugten Ausgestaltung abbiegbar ausgebildet ist, ist vorgesehen, dass im Bereich der vertikal verlaufenden Biegekante eine Anzahl von vertikal übereinander liegenden und einen gegenseitigen Abstand voneinander einnehmenden, die Wandung der Wand 6 schwächende Perforierungen 5 vorgesehen sind.

Die Perforierungen 5 können beispielsweise als Langlöcher ausgebildet sein. Sie durchsetzen die Wandung 6 voll.

In einer anderen Ausgestaltung kann es vorgesehen sein, dass die Perforierungen als Löcher ausgebildet sind.

In einer dritten Ausgestaltung kann es vorgesehen sein, dass statt der Perforierungen 5 biegungsgeschwächte Bereiche vorgesehen sind, die z. B. durch eine Abkantmaschine als Querschnitt dort eingebracht ist.

Wichtig ist, dass sich der Bördelrand 7, 8 über die gesamte Länge des Blechstreifens 1 erstreckt, so dass sich dieser auch bis in den Bereich der gegenüberliegenden Verbindungsstelle 3 gemäß Figur 3 erstreckt.

Dort ist der Bördelrand 8 aufgebogen und bildet einen erweiterten Bördelrand 9, wie dies am besten in Figur 7 und Figur 4 erkennbar ist.

Der ansonsten dicht an das Material angelegte Bördelrand 7 und 8 gemäß den Figuren 5 und 6 ist also im Bereich des Bördelrandes 9 erweitert und bildet einen Aufnahmeschlitz 16, in dem später der obere Teil der Zunge 4 mit der Freistellung 17 eingesteckt wird.

Der Bördelrand 9 ist deshalb im Bereich eines Übergangs 10 von dem eng anliegenden Bördelrand abgehoben.

Im Bereich des rechten Verbindungsendes 3 ist eine Verriegelungsöffnung 11 angeordnet, die in ihrer Formgebung mit einer Verriegelungszunge 12 übereinstimmt, die im Bereich der gegenüberliegenden Zunge 4 angeordnet ist.

Die Verriegelungszunge 12 ist dadurch aus dem Material der Wand 6 heraus biegbar gestaltet, in dem eine Freistellung 13 die Formgebung der Verriegelungszunge 12 definiert.

Es ist nicht lösungsnotwendig, dass die Verriegelungszunge 12 eine längliche Formgebung aufweist. Sie kann auch vollkommen rund ausgebildet sein. Ebenso kann die Verriegelungszunge als Zacken mit einer Spitze ausgebildet sein, und ebenso können mehrere Verriegelungszungen 12 untereinanderliegend mit entsprechenden Freistellungen 13 im gegenseitigen Abstand im Bereich der Zunge 4 verteilt werden, wobei dann auf der gegenüberliegenden Seite entsprechende Verriegelungsöffnungen 11 angeordnet sein müssen.

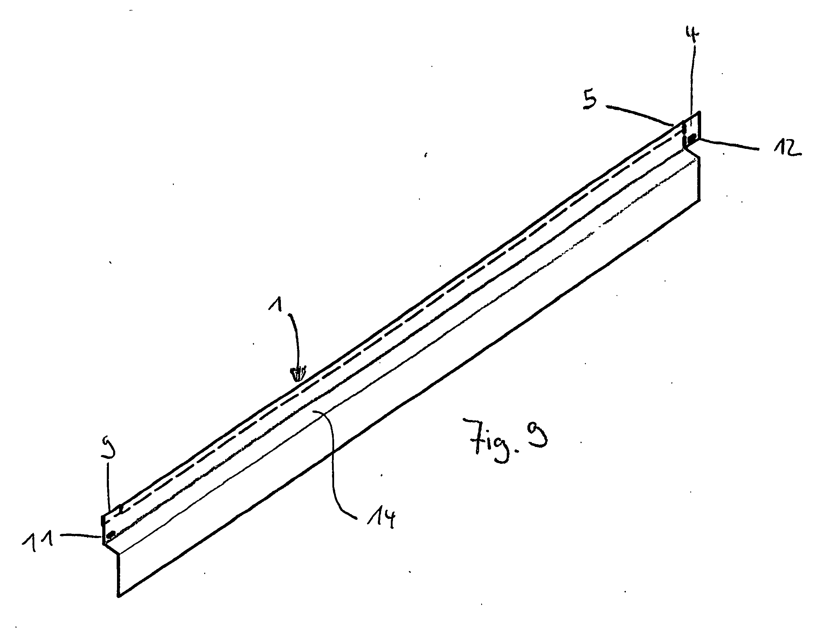

Die Figur 9 zeigt ein anderes Ausführungsbeispiel eines Blechstreifens 1, wo erkennbar ist, dass sich über die gesamte Länge des Blechstreifens 1 eine Abkantung 14 erstreckt, die als Rasenkante vorgesehen ist.

In diesem Fall ist die Zunge 4 in ihrer Längserstreckung kürzer ausgebildet und erstreckt sich nur noch bis zur Abkantung 14 und gleiches gilt für die gegenüberliegende Verbindungsstelle 3, in der der erweiterte Bördelrand 9 und die Verriegelungsöffnung 11 angeordnet ist.

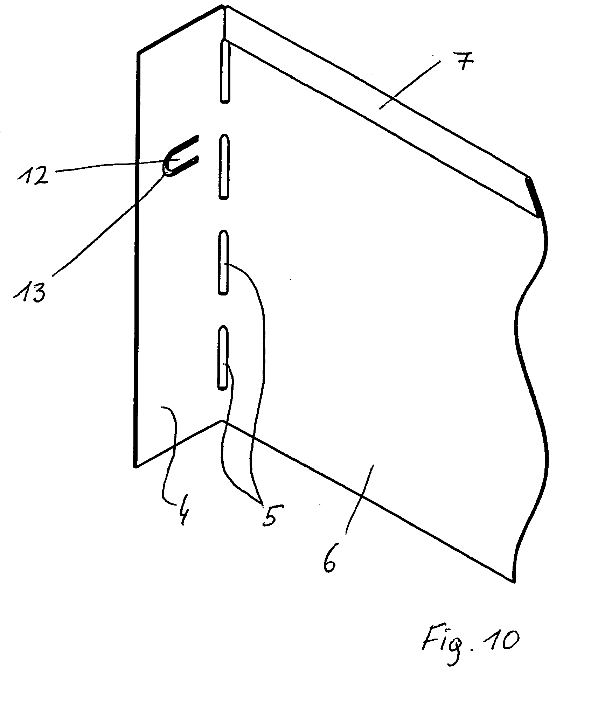

Die Figur 10 zeigt nun, dass die Möglichkeit besteht, dass man die Zunge 4 abknickt, weil die vorher genannten Perforierungen 5 eine Querschnittsschwächung in der Wand 6 ausführen.

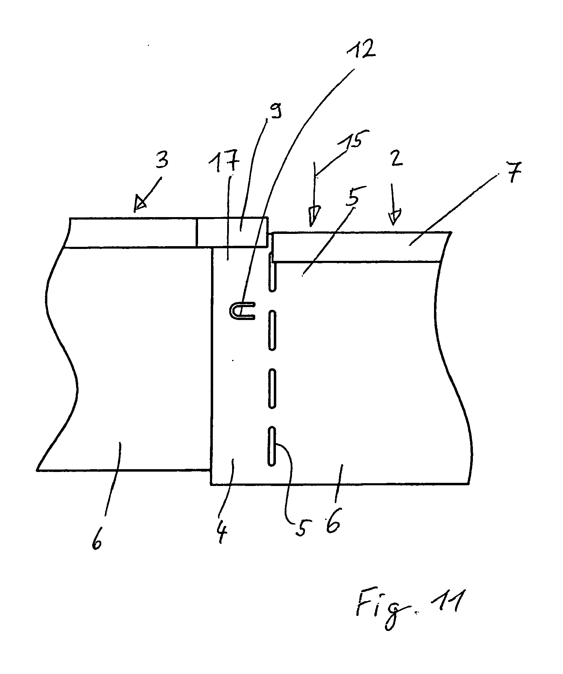

Auf diese Weise können auch gerade und wahlweise auch gebogene Blechstreifen ineinander gesteckt werden, wie dies anhand der Figuren 11 bis 13 näher erläutert wird.

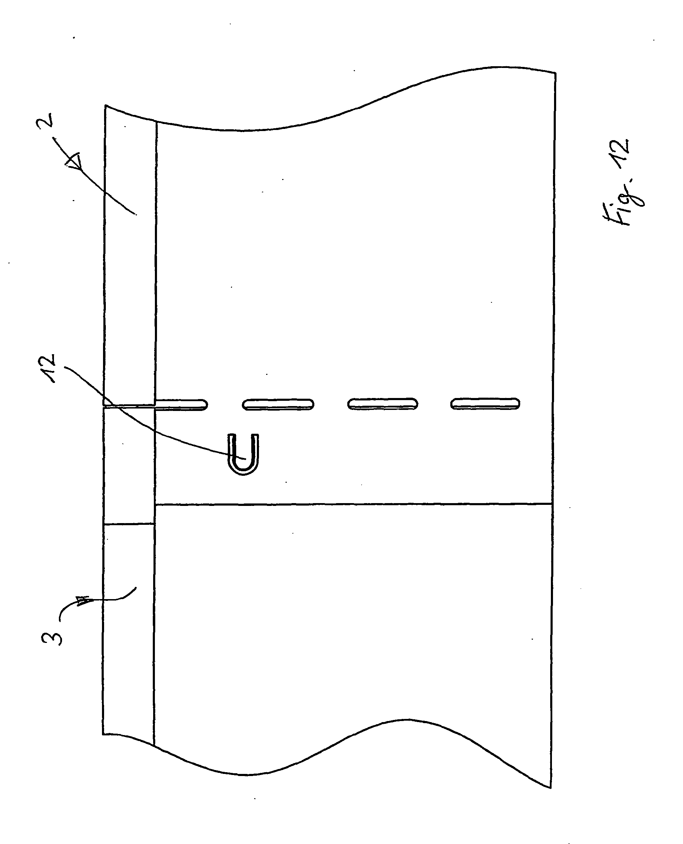

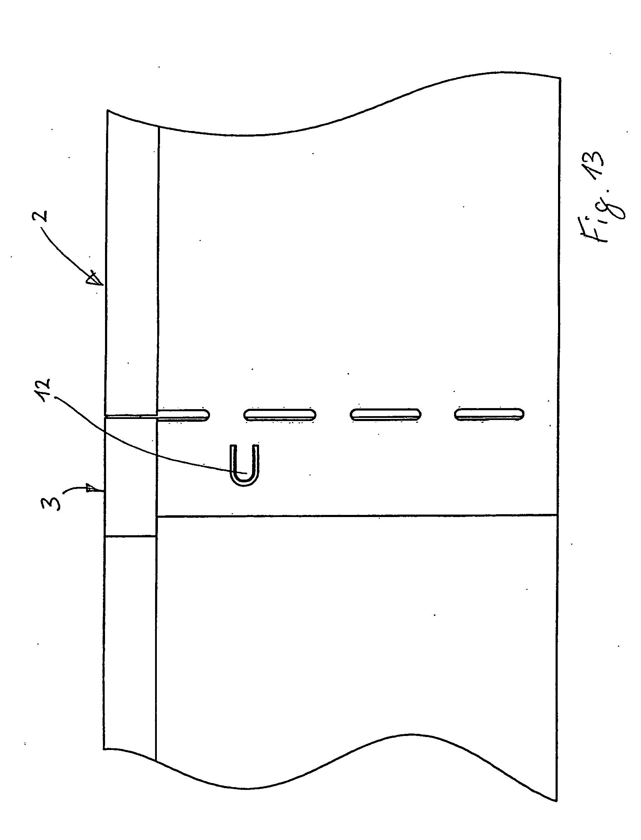

Die Figur 11 zeigt, dass z. B. der Blechstreifen auf der rechten Seite bereits schon fertig montiert im Erdboden verankert ist, während der linke Blechstreifen nun hinzugefügt wird und von oben her in Pfeilrichtung 15 nach unten gegen den Blechstreifen geführt wird. Auf diese Weise gelangt die Freistellung 17 der Zunge 4 in den Bereich des erweiterten Bördelrandes 9, und die beiden Teile greifen nun fest ineinander. Dies ist in Figur 12 dargestellt. An und für sich würden die beiden Blechstreifen bereits schon so einen formschlüssigen Verbund ergeben. Zur zusätzlichen Sicherung dieser Verbindung ist eine lösbare Verbindung vorgesehen, die aus der vorher beschriebenen Verriegelungszunge 12 und der zugeordneten Verriegelungsöffnung 11 besteht. Hierzu wird gemäß Figur 13 mit einem Werkzeug (z. B. einer Schraubenzieherklinge) die Verriegelungszunge 12 aus der Ebene der Wand 6 des Blechstreifens 1 herausgebogen, so dass diese Zunge dann in den Bereich der Verriegelungsöffnung 11 gelangt und dort einrastet oder eingebogen wird. Damit sind die beiden Blechstreifen im Bereich ihrer Verbindungsenden 2, 3 fest miteinander verbunden und sind sowohl gegen Zugkraft in horizontaler Richtung als auch gegen Verschiebungskräfte in vertikaler Richtung geschützt.

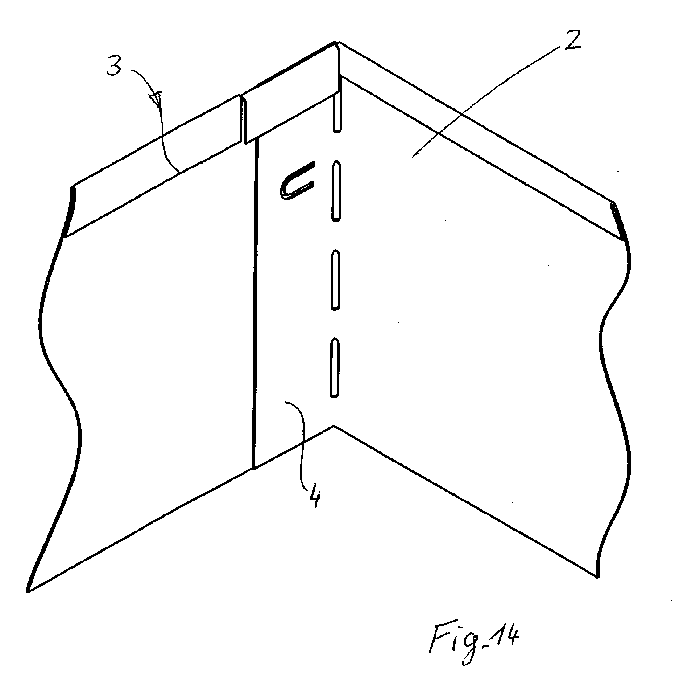

Die Figur 14 zeigt nun eine solche zusammengebaute Beeteinfassung, wobei die Blechstreifen gerade und abgewinkelt aneinander anstoßen, so dass sich hier eine im Winkel verlaufende ungebogene Beeteinfassung ergibt.

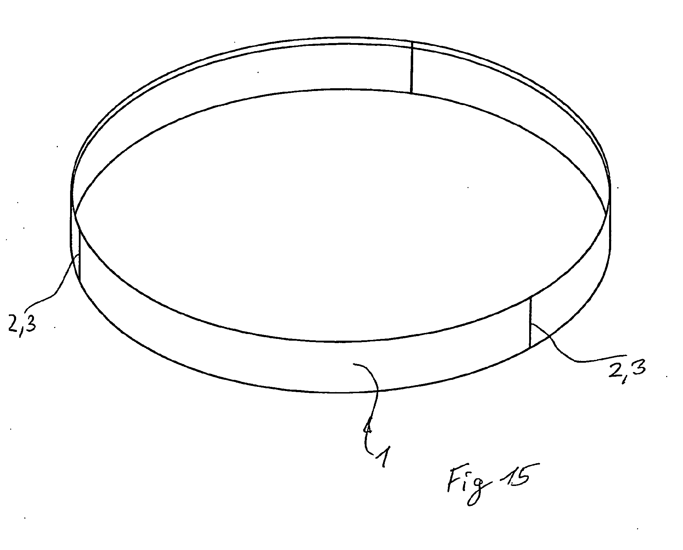

Figur 15 zeigt als anderes Ausführungsbeispiel eine rund verlaufende Beeteinfassung, wobei zwei Blechstreifen 1 mit stetig sich fortsetzender Krümmung miteinander verbunden sind und hierbei die Verbindungsenden 2, 3 jeweils ineinander greifen, so wie dies in Figur 15 dargestellt ist. Es ergeben sich somit sehr schön anzusehende runde Beeteinfassungen, die mit den üblichen Mitteln des Standes der Technik bisher nicht möglich waren.

### Zeichnunaslegende

- 1: Blechstreifen
- 2: Verbindungsende
- 3: Verbindungsende
- 4: Zunge
- 5: Perforierung
- 6: Wand
- 7: Bördelrand
- 8: Bördelrand
- 9: Bördelrand
- 10: Übergang
- 11: Verriegelungsöffnung
- 12: Verriegelungszunge
- 13: Freistellung
- 14: Abkantung
- 15: Pfeilrichtung
- 16: Aufnahmeschlitz
- 17: Freistellung

## Patentansprüche

1. Einfassung für Beete und Grünlandflächen bestehend aus mindestens zwei stirnseitig miteinander verbindbaren Blechstreifen, die mindestens an der oberen Längsseite umgebördelt und im Bereich ihrer Stirnseiten Verbindungsenden (2, 3) bilden, die gegenseitig überlappend ineinander gesteckt sind, wobei das eine Verbindungsende als Zunge (4) ausgebildet ist, die im gegenüberliegenden Verbindungsende in einen dort angeordneten Aufnahmeschlitz (16) eingreift, **dadurch gekennzeichnet, dass** ein in der Umbördelung des einen Verbindungsendes (3) angeordneter Aufnahmeschlitz (16) in senkrechter Richtung zur Längserstreckung des Blechstreifens (6) auf die Zunge (4) am anderen Verbindungsende (2) aufsteckbar ist.

2. Einfassung nach Anspruch 1, **dadurch gekennzeichnet, dass** die Zunge (4) aus einem etwa rechteckförmigen, ungebördelten Blechstreifen besteht, der die Wand (6) des Blechstreifens (1) an einem Verbindungsende (2, 3) in gleicher Breite (Höhe) fortsetzt

3. Einfassung nach Anspruch 1 oder 2, **dadurch gekennzeichnet, dass** der umgebördelte, obere stirnseitige und sich über die gesamte Länge erstreckende Bördelrand (7) des Blechstreifens (1) sich nur bis kurz vor eine endseitige Freistellung (17) erstreckt und so die sich daran anschließende Zunge (4) bildet.

4. Einfassung nach einem der Ansprüche 1 bis 3, **dadurch gekennzeichnet, dass** an dem einen Verbindungsende (2,3) eine aus der Ebene der Wandung des Blechstreifens (1) herausdrückbare Verriegelungszunge (12) angeordnet ist, die in eine am anderen Verbindungsende (2,3) angeordnete Verriegelungsöffnung (11) einschwenkbar ist.

5. Beeteinfassung nach einem der Ansprüche 1 bis 4, **dadurch gekennzeichnet, dass** der bördelrandseitige Aufnahmeschlitz (16) als Führung zum Einstecken des folgenden Blechstreifens dient.

6. Beeteinfassung nach einem der Ansprüche 1 bis 5, **dadurch gekennzeichnet, dass** die Zunge (4) als Verlängerung des Blechstreifens (1) biegbar am Blechstreifen ansetzt.

7. Beeteinfassung nach einem der Ansprüche 1 bis 6, **dadurch gekennzeichnet, dass** die Biegbarkeit der Zunge (4) durch in Querrichtung der Wand (6) des Blechstreifens (1) sich erstreckende Perforierungen (5) gegeben ist.

8. Beeteinfassung nach einem der Ansprüche 1 bis 7, **dadurch gekennzeichnet, dass** am Blechstreifen (1) im Übergang zur Zunge (4) biegungsgeschwächte Bereiche vorgesehen sind.

9. Beeteinfassung nach einem der Ansprüche 1 bis 8, **dadurch gekennzeichnet, dass** sich der Bördelrand (7, 8, 9) über die gesamte Länge des Blechstreifens (1) erstreckt, und im Bereich der gegenüberliegenden Verbindungsstelte 3 aufgebogen ist und einen erweiterten Bördelrand 9 als Aufnahmeschlitz (16) ausbildet.

10. Beeteinfassung nach einem der Ansprüche 1 bis 9, **dadurch gekennzeichnet, dass** die Verriegelungszunge (12) aus dem Material der Wand (6) heraus biegbar ist, in dem eine Freistellung (13) in der Wand (6) die Formgebung der Verriegelungszunge (12) definiert.

11. Beeteinfassung nach einem der Ansprüche 1 bis 10, **dadurch gekennzeichnet, dass** zur Ausbildung einer mit dem Rasenmäher überfahrbaren Rasenkante der Blechstreifen (1) ein sich in Längsrichtung erstreckende Abkantung (14) aufweist.

## Claims

1. Enclosure for beet and grassland areas consisting of at least two sheet metal strips, which can be connected to one another at the end face, are flanged, at least at the upper longitudinal side, and, in the region of their end faces form connecting ends (2, 3), which are inserted into one another to mutually overlap, the one connecting end being configured as a tongue (4), which engages in the opposing connecting end in a receiving slot (16) arranged there, **characterised in that** a receiving slot (16) arranged in the flanging of the one connecting end (3) can be placed on the tongue (4) at the other connecting end (2) in the perpendicular direction with respect to the longitudinal extent of the sheet metal strip (6).

2. Enclosure according to claim 1, **characterised in that** the tongue (4) consists of an approximately rectangular, unflanged sheet metal strip, which continues the wall (6) of the sheet metal strip (1) at a connecting end (2, 3) at the same width (height).

3. Enclosure according to claim 1 or 2, **characterised in that** the upper end face flanged edge (7), which extends over the entire length and is flanged, of the sheet metal strip (1) extends only to shortly before a free position (17) on the end and thus forms the tongue (4) adjacent thereto.

4. Enclosure according to any one of claims 1 to 3, **characterised in that** arranged at the one connecting end (2, 3) is a locking tongue (12), which can be pressed out of the level of the wall of the sheet metal strip (1), it being possible to pivot said locking tongue into a locking opening (11) arranged at the other connecting end (2, 3).

5. Beet enclosure according to any one of claims 1 to 4, **characterised in that** the receiving slot (16) on the flanged edge side serves as a guide for inserting the following sheet metal strip.

6. Beet enclosure according to any one of claims 1 to 5, **characterised in that** the tongue (4) is arranged in a bendable manner on the sheet metal strip as an extension of the sheet metal strip (1).

7. Beet enclosure according to any one of claims 1 to 6, **characterised in that** the bendability of the tongue (4) is provided by perforations (5) extending in the transverse direction of the wall (6) of the sheet metal strip (1).

8. Beet enclosure according to any one of claims 1 to 7, **characterised in that** bend-weakened regions are provided on the sheet metal strip (1) in the transition to the tongue (4).

9. Beet enclosure according to any one of claims 1 to 8, **characterised in that** the flanged edge (7, 8, 9) extends over the entire length of the sheet metal strip (1) and is bent up in the region of the opposing connecting point (3) and forms a widened flanged edge (9) as a receiving slot (16).

10. Beet enclosure according to any one of claims 1 to 9, **characterised in that** the locking tongue (12) can be bent from the material of the wall (6), **in that** a free position (13) in the wall (6) defines the shaping of the locking tongue (12).

11. Beet enclosure according to any one of claims 1 to 10, **characterised in that** to form a lawn edge, which a lawnmower can travel over, the sheet metal strip (1) has a fold (14) extending in the longitudinal direction.

## Revendications

1. Bordure pour parterres et surfaces vertes, composé d'au moins deux bandes de tôle qui sont aptes à être reliées côté frontal, qui sont rabattues au moins sur le côté longitudinal supérieur et qui forment dans la zone de leurs côtés frontaux des extrémités de liaison (2, 3) emboîtées en se chevauchant mutuellement, étant précisé qu'une extrémité de liaison est conçue comme une languette (4) qui pénètre, dans l'extrémité de liaison opposée, dans une fente de logement (16) disposée à cet endroit, **caractérisée en ce qu'**une fente de logement (16) disposée dans la partie rabattue d'une extrémité de liaison (3) est apte à être emboîtée sur la languette (4) prévue sur l'autre extrémité de liaison (2), dans un sens perpendiculaire au sens longitudinal de la bande de tôle (6).

2. Bordure selon la revendication 1, **caractérisée en ce que** la languette (4) se compose d'une bande de tôle à peu près rectangulaire non rabattue qui prolonge la paroi (6) de la bande de tôle (1) à une extrémité de liaison (2, 3) sur la même largeur (hauteur).

3. Bordure selon la revendication 1 ou 2, **caractérisée en ce que** le bord de rabattement (7) frontal supérieur rabattu qui s'étend sur toute la longueur de la bande de tôle (1) ne s'étend que jusqu'à une courte distance d'un dégagement côté extrémité (17), et que c'est ainsi que se forme la languette (4) qui lui fait suite.

4. Bordure selon l'une des revendications 1 à 3, **caractérisée en ce qu'**il est prévu sur une extrémité de liaison (2, 3) une languette de verrouillage (12) qui est apte à être poussée hors du plan de la paroi de la bande de tôle (1) et qui est apte à être rentrée, en pivotant, dans une ouverture de verrouillage (11) disposée sur l'autre extrémité de liaison (2, 3).

5. Bordure selon l'une des revendications 1 à 4, **caractérisée en ce que** la fente de logement côté bord de rabattement (16) sert de guidage pour emboîter la bande de tôle suivante.

6. Bordure selon l'une des revendications 1 à 5, **caractérisée en ce que** la languette (4) est appliquée de manière flexible sur la bande de tôle sous la forme d'un prolongement de ladite bande de tôle (1).

7. Bordure selon l'une des revendications 1 à 6, **caractérisée en ce que** la flexibilité de la languette (4) est définie par des perforations (5) qui s'étendent dans le sens transversal de la paroi (6) de la bande de tôle (1).

8. Bordure selon l'une des revendications 1 à 7, **caractérisée en ce qu'**il est prévu sur la bande de tôle (1), dans la transition avec la languette (4), des zones affaiblies en vue d'un pliage.

9. Bordure selon l'une des revendications 1 à 8, **caractérisée en ce que** le bord de rabattement (7, 8, 9) s'étend sur toute la longueur de la bande de tôle (1), et est un peu déplié dans la zone du point de liaison opposé (3) et forme un bord de rabattement élargi (9), comme fente de logement (16).

10. Bordure selon l'une des revendications 1 à 9, **caractérisée en ce que** la languette de verrouillage (12) est apte à être pliée à partir du matériau de la paroi (6), dans lequel un dégagement (13) dans ladite paroi (6) définit la forme de la languette de verrouillage (12).

11. Bordure selon l'une des revendications 1 à 10, **caractérisée en ce que** pour former un bord de gazon sur lequel la tondeuse à gazon peut passer, la bande de tôle (1) présente une partie coudée (14) qui s'étend dans le sens longitudinal.
